# EUROPEAN PATENT APPLICATION

(11) **EP 1 839 743 A1**
(43) Date of publication of application: **03.10.2007**
(21) Application number: 05819656.9
(22) Date of filing: 20.12.2005
(51) Int. Cl.: B01J 20/02, C10G 25/00, H01M 8/06

(54) **DESULFURIZING AGENT FOR ORGANOSULFUR COMPOUND-CONTAINING FUEL OIL, AND PROCESS FOR PRODUCING HYDROGEN FOR FUEL CELL**

(30) Priority: 24.12.2004 JP 2004373632
(71) Applicant: IDEMITSU KOSAN CO., LTD., Tokyo 100-8321 (JP)
(72) Inventor: SAITO, Kazuhito, 2990293 (JP); UTAKA, Toshimasa, 2990293 (JP); TAKIZAWA, Chiaki, 2990293 (JP)
(74) Representative: Hoffmann, Klaus
(86) International application number: PCT/JP2005/023358
(87) International publication number: WO 2006/068135

(57) **Abstract**

To provide a desulfurizing agent which can efficiently desulfurize a liquid fuel containing organic sulfur compounds at 80°C or lower so as to attain a considerably low sulfur content, so that hydrogen can be produced from the desulfurized fuel through steam reforming, autothermal reforming, or partial-oxidation reforming, and that poisoning of a reforming catalyst employed in the reforming processes can be prevented.

The desulfurizing agent for hydrocarbon compounds, including a porous carrier and Ag supported on the carrier, wherein the amount of Ag supported on the carrier is 0.5 to 50 mass%, and the ratio of amount by mole of nitrogen contained in the agent to amount by mole of Ag is 10 to 100%.

## Description

### Technical Field

The present invention relates to a method for removing sulfur from liquid fuel, to a process for producing hydrogen, and to a fuel cell system. More particularly, the invention relates to a desulfurization method which enables effective removal of sulfur from liquid fuel at 80°c or lower over a long period of time so as to attain a considerably low sulfur level, and to a system employing, as a feedstock of a fuel cell, hydrogen produced through reforming of a liquid fuel desulfurized through the desulfurization method.

### Background Art

In recent years, new energy-production techniques have attracted attention, from the standpoint of environmental issues, and among these techniques a fuel cell has attracted particular interest. The fuel cell converts chemical energy to electric energy through electrochemical reaction of hydrogen and oxygen, attaining high energy utilization efficiency. Therefore, extensive studies have been carried out on realization of fuel cells for civil use, industrial use, automobile use, etc. Fuel cells are categorized in accordance with the type of employed electrolyte, and, among others, a phosphoric type, a molten carbonate salt type, a solid oxide type, and a polymer electrolyte type have been known. With regard to hydrogen sources, studies have been conducted on methanol; liquefied natural gas predominantly containing methane; city gas predominantly containing natural gas; a synthetic liquid fuel produced from natural gas serving as a feedstock; and petroleum-derived hydrocarbon oils such as naphtha and kerosene.

Upon use (e.g., civil use or automobile use) of fuel cells, the aforementioned hydrocarbon oils, *inter alia,* petroleum-derived oils, are advantageously employed as hydrogen sources, since the hydrocarbons are in the form of liquid at ambient temperature and pressure, are easy to store and handle, and supply systems (e.g., gasoline stations and service stations) are well-furnished. However, hydrocarbon oils have a problematically higher sulfur content as compared with methanol and natural gas. When hydrogen is produced from the hydrocarbon oils, the hydrocarbon oils are generally steam-reformed, autothermal-reformed, or partial-oxidation-reformed, in the presence of a reforming catalyst. During such reformation processes, the aforementioned reformation catalyst is poisoned by sulfur content of the hydrocarbon oils. Therefore, the hydrocarbon oils must be desulfurized, from the viewpoint of life of the catalyst, to the extent that the sulfur content is reduced to 0.2 ppm by mass or lower over a long period of time.
Meanwhile, for applications in which hydrogen is fed directly to automobiles, addition of an odorant to hydrogen is now under investigation for safety reasons. Thus, another key issue is that the level of sulfur compounds (i.e., odorants) contained in feedstock oil is reduced to as low a degree as possible.

Hitherto, a variety of desulfurization methods for petroleum-derived hydrocarbons have been studied. According to one known method, hydrocarbon is hydro-desulfurized by use of a hydrodesulfurization catalyst (e.g., Co-Mo/alumina or Ni-Mo/alumina) and a hydrogen sulfide adsorbent (e.g., ZnO) under ambient pressure to 5 MPa·G at 200 to 400°C. In this method, hydrodesulfurization is performed under severe conditions, to thereby remove sulfur as hydrogen sulfide. When the method is employed, care must be taken for safety and the environment as well as for relevant laws such as the high-pressure gas safety law. Thus, the method is not preferred for producing hydrogen for small-scale dispersed-type fuel cells. In other words, there is demand for a desulfurizing agent for producing hydrogen for fuel cells, the agent being able to desulfurize a fuel under a pressure lower than 1 MPa·G over a long period of time.
There has also been proposed a nickel-containing adsorbent, serving as a desulfurizing agent, for removing sulfur contained in fuel oil through adsorption under mild conditions (see, for example, Patent Documents 1 to 12). In addition, adsorbents containing nickel and copper, which are improved adsorbents, have also been proposed (see, for example, Patent Document 11 or 13). However, these nickel-copper adsorbents are employed at high temperatures (250 to 450°C).

In known desulfurization processes of organic sulfur compounds, silver/alumina, silver/silica-alumina, or a similar desulfurizing agent is employed (Patent Document 14). A desulfurizing agent including an activated carbon carrier, and nickel oxide and zinc oxide supported on the carrier (Patent Document 15), and copper-chlorine/alumina and palladium-chlorine/alumina (Patent Document 16) are employed in desulfurization of liquid fuel oil containing organic sulfur compounds at 100°C or lower. Other than the agents disclosed in Patent Document 14, a desulfurizing agent for hydrocarbon compounds, which agent employs silver nitrate, is disclosed (Patent Document 17).
When liquid fuel is desulfurized at high temperature, heating by means of an electric heater, heating through combustion of fuel, or other types of heating are required, which impairs energy efficiency. In addition, the aforementioned conventional techniques cannot be employed on a practical level for desulfurization of kerosene at 80°C or lower, particularly at ambient temperature.

[Patent Document 1]
   Japanese Patent Publication (kokoku) No. 6-65602
[Patent Document 2]
   Japanese Patent Publication (kokoku) No. 7-115842
[Patent Document 3]
   Japanese Patent Application Laid-Open (kokai) No. 1-188405
[Patent Document 4]
   Japanese Patent Publication (kokoku) No. 7-115843
[Patent Document 5]
   Japanese Patent Application Laid-Open (kokai) No. 2-275701
[Patent Document 6]
   Japanese Patent Application Laid-Open (kokai) No. 2-204301
[Patent Document 7]
Japanese Patent Application Laid-Open (kokai) No. 5-70780
   [Patent Document 8]
Japanese Patent Application Laid-Open (kokai) No. 6-80972
   [Patent Document 9]
Japanese Patent Application Laid-Open (kokai) No. 6-91173
   [Patent Document 10]
Japanese Patent Application Laid-Open (kokai) No. 6-228570
   [Patent Document 11]
Japanese Patent Application Laid-Open (kokai) No. 2001-279259
   [Patent Document 12]
Japanese Patent Application Laid-Open (kokai) No. 2001-342465
   [Patent Document 13]
Japanese Patent Application Laid-Open (kokai) No. 6-315628
   [Patent Document 14]
Japanese Patent Application Laid-Open (kokai) No. 2002-316043
   [Patent Document 15]
Japanese Patent Application Laid-Open (kokai) No. 2003-144930
   [Patent Document 16]
Japanese Patent Application Laid-Open (kokai) No. 2002-294256
   [Patent Document 17]
Japanese Patent Application Laid-Open (kokai) No. 2004-305869

### Disclosure of the Invention

### Problems to be Solved by the Invention

An object of the present invention is to provide a method for producing a desulfurizing agent which can efficiently desulfurize a liquid fuel containing organic sulfur compounds at 80°C or lower so as to attain a considerably low sulfur content, so that hydrogen can be produced from the desulfurized fuel through steam reforming, autothermal reforming, or partial-oxidation reforming, and that poisoning of a reforming catalyst employed in the reforming processes can be prevented. Another object of the invention is to provide a fuel cell system employing hydrogen produced through reforming of the thus-desulfurized fuel.

### Means for Solving the Problems

The present inventors have carried out extensive studies in order to attain the aforementioned objects, while focusing on the facts that conventional desulfurizing agents are produced at disadvantageously high cost due to a high-temperature calcination step and that the desulfurizing agents exhibit unsatisfactory performance at 80°C or lower. Thus, the inventors have found that a desulfurizing agent which can efficiently desulfurize a liquid fuel containing organic sulfur compounds at 80°C or lower so as to attain a considerably low sulfur content can be produced at a temperature lower than 450°C through use of a specific metal salt. The present invention has been accomplished on the basis of this finding.
Accordingly, the present invention provides the following:
(1) a desulfurizing agent for hydrocarbon compounds, comprising a porous carrier, and Ag supported on the carrier, wherein the Ag content is 0.5 to 50 mass%, and the ratio of the amount by mole of nitrogen contained in the agent to the amount by mole of Ag is 10 to 100%.
(2) a desulfurizing agent for hydrocarbon compounds according to (1), which has an Ag content of 3 to 30 mass%;
(3) a desulfurizing agent for hydrocarbon compounds according to (1) or (2), wherein Ag is supported on the carrier through application of silver nitrate;
(4) a desulfurizing agent for hydrocarbon compounds according to any of (1) to (3), wherein the porous carrier is at least one species selected from among silica-alumina, silica, alumina, zeolite, titania, zirconia, magnesia, silica-magnesia, zinc oxide, terra alba, clay, diatomaceous earth, and activated carbon;
(5) a desulfurization method comprising desulfurizing hydrocarbon compounds by use of a desulfurizing agent as recited in any of (1) to (4);
(6) a desulfurization method according to (5), wherein the hydrocarbon compound is at least one species selected from among natural gas, alcohol, ether, LPG, naphtha, gasoline, kerosene, light oil, heavy oil, asphaltene oil, oil recovered from oil sand, liquefied coal oil, petroleum-derived heavy oil, shale oil, GTL, oil recovered from waste plastics, and biofuel;
(7) a desulfurization method according to (5) or (6), wherein desulfurization is performed at -40 to 80°C;
(8) a process for producing hydrogen, characterized by comprising desulfurizing hydrocarbon compounds through a desulfurization method as recited in any of (5) to (7) and reforming the desulfurized hydrocarbon compounds through contact with a reformation catalyst;
(9) a process for producing hydrogen according to (8), wherein the reforming catalyst is any of a steam reforming catalyst, an autothermal reforming catalyst, and a partial-oxidation reforming catalyst;
(10) a process for producing hydrogen according to (8) or (9), wherein the steam reforming catalyst, the autothermal reforming catalyst, or the partial-oxidation reforming catalyst is an Ni-based, Rh-based, or Ru-based catalyst; and
(11) a fuel cell system characterized by employing hydrogen produced through a process as recited in any of (8) to (10).

### Effects of the Invention

The desulfurizing agent of the present invention can be produced at a temperature lower than 450°C, which is remarkably lower than temperatures at which conventional desulfurizing agents are produced. According to the sulfur removal method (hereinafter may be referred to as the desulfurization method) of the present invention, a liquid fuel containing organic sulfur compounds can be effectively desulfurized at 80°C or lower, furthermore at ambient temperature. When the desulfurization method is applied to a liquid fuel for producing hydrogen through reforming, the reforming catalyst can function effectively, and the life of the catalyst can be prolonged. Thus, hydrogen produced through reforming of a liquid fuel in the aforementioned manner can be effectively utilized in a fuel cell.

### Brief Description of the Drawings

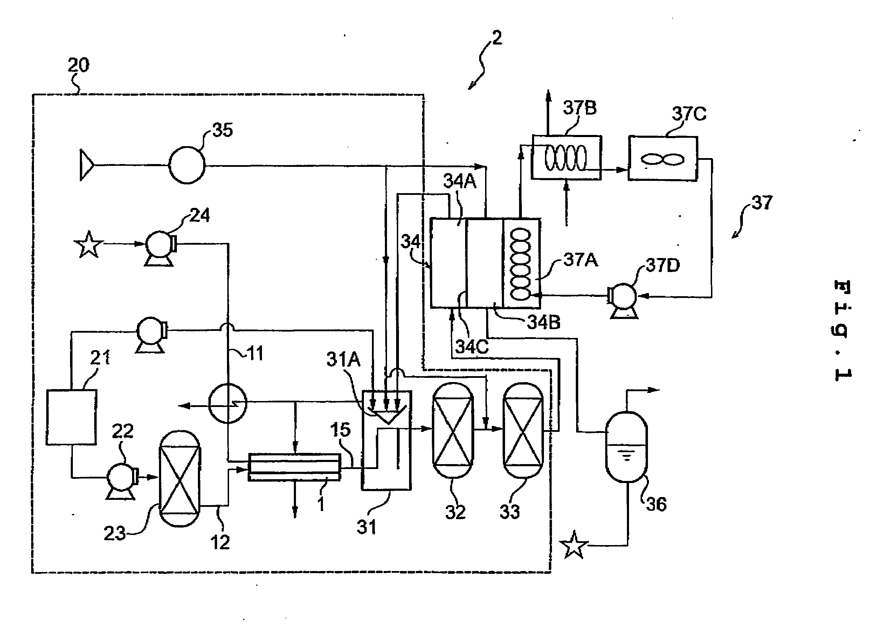

Fig. 1 shows a schematic diagram of an exemplary fuel cell system according to the present invention.

### Description of Reference Numerals

1: Gasifier
2: Fuel cell system
20: Hydrogen production system
21: Fuel tank
23: Desulfurizer
31: Reforming apparatus
31A: Boiler
32: CO converter
33: CO-selective oxidizer
34: Fuel cell
34A: Anode
34B: Cathode
34C: Polymer electrolyte
36: Liquid/gas separator
37: Exhausted heat recovering apparatus
37A: Heat-exchanger
37B: Heat-exchanger
37C: Cooler

### Best Modes for Carrying Out the Invention

A characteristic feature of the desulfurizing agent employed in the desulfurization method of the present invention resides in that the agent contains silver nitrate supported on a carrier. The carrier contained in the desulfurizing agent of the present invention is preferably a porous inorganic oxide. The inorganic oxide is preferably silica, alumina, silica-alumina, zeolite, titania, zirconia, magnesia, silica-magnesia, zinc oxide, terra alba, clay, diatomaceous earth, or activated carbon. These inorganic oxides may be used singly or in combination of two or more species. More preferably, the inorganic oxide predominantly contains aluminum species such as alumina or silica-alumina. The porous carrier preferably has a surface area of 200 m²/g or more.

For causing silver nitrate to be supported on the carrier, the impregnation method is particularly preferred. The amount of silver nitrate supported on the carrier, as reduced to metallic silver, is preferably 0.5 to 50 mass%, more preferably 3 to 30 mass%. In the impregnation method, the amount of metallic component supported on the carrier is preferably 50 mass% or less, since the dispersion state of metallic component particles supported on the carrier can be maintained, attaining satisfactory desulfurization performance. In a specific procedure, a carrier is dried overnight at 105 to 140°C. Before the temperature of the carrier fell significantly, or after the carrier is cooled under moisture-controlled circumstances (e.g., by use of a desiccator), the carrier is impregnated with a silver nitrate solution. Thereafter, the thus-treated carrier is dried again at about 105 to 140°C, to thereby yield a desulfurizing agent of interest. If required, the dried carrier may be calcined at a temperature lower than 450°C. The thus-produced desulfurizing agent exhibits desulfurization performance, which is closely correlated with the ratio by mole of nitrogen contained in the desulfurizing agent to silver. The mole ratio is preferably 10 to 100%.

The dried or calcined desulfurizing agent is pulverized to an appropriate particle size. The desulfurizing agent preferably has a particle size of 0.1 to 3 mm, more preferably 0.2 to 2.5 mm.

In the present invention, no particular limitation is imposed on the liquid fuel containing sulfur compounds which is desulfurized by use of the aforementioned desulfurizing agent. The liquid fuel is, for example, one species selected from among alcohol, ether, naphtha, gasoline, kerosene, light oil, heavy oil, asphaltene oil, oil recovered from oil sand, liquefied coal oil, shale oil, GTL, oil recovered from waste plastics, biofuel, and mixtures thereof. Of these, kerosene is preferred as the fuel to which the desulfurizing agent of the present invention is applied, with kerosene (JIS No. 1) having a sulfur content of 80 ppm by mass or less being particularly preferred. The kerosene (JIS No. 1) is produced through distillation of crude oil under ambient pressure and desulfurizing the thus-yielded crude kerosene. Generally, the crude kerosene, having a high sulfur content, cannot serve as kerosene (JIS No. 1) and, therefore requires reduction of the sulfur content. In order to reduce sulfur content, desulfurization is preferably performed through hydro-refining desulfuriztion, which is generally carried out in the industry. The desulfurization catalyst employed in the desulfurization generally includes an alumina-based carrier and, a mixture of oxide, sulfide, etc. containing transition metal such as nickel, cobalt, molybdenum, and tungsten at appropriate proportions supported on the carrier. Reaction conditions include, for example, a reaction temperature of 250 to 400°C, a pressure of 2 to 10 MPa-G, a hydrogen/oil mole ratio of 2 to 10, and a liquid hourly space velocity (LHSV) of 1 to 5 hr⁻¹.

In one preferred embodiment of the method for desulfurizing a liquid fuel containing organic sulfur compounds by use of the desulfurizing agent of the present invention, a liquid fuel containing organic sulfur compounds is caused to pass through the desulfurizing agent. In another preferred embodiment of the method, a liquid fuel containing organic sulfur compounds is, statically or with stirring, placed in a vessel such as a tank in which the desulfurizing agent has been immobilized. According to the present invention, desulfurization is performed at 80°C or lower. When the desulfurization temperature is 80°C or lower, energy cost is reduced, which is advantageous from an economical viewpoint. No particular limitation is imposed on the lower limit of the desulfurization temperature, and the temperature is appropriately predetermined in consideration of flowability of the liquid fuel to be desulfurized, desulfurization activity of the desulfurizing agent, and other factors. When the liquid fuel to be desulfurized is kerosene, the lower limit of desulfurization temperature is about -40°C from the viewpoint of pour point, and the desulfurization temperature is preferably 0 to 50°C, particularly about room temperature.
No particular limitation is imposed on the desulfurization conditions other than the temperature conditions, and the conditions may be appropriately selected in accordance with the properties of the liquid fuel to be desulfurized. Specifically, when a liquid hydrocarbon fuel (e.g., kerosene (JIS No. 1)) is caused to flow upward or downward in a desulfurization tower charged with the desulfurizing agent of the present invention, the fuel is generally desulfurized at about room temperature, ambient pressure to about 1 MPa·G, and an LHSV of about 2 hr⁻¹ or less. In this case, a small amount of hydrogen may be co-present in accordance with needs. Through appropriate tuning the desulfurization conditions to fall within the aforementioned range, hydrocarbon s, for example, that having a sulfur content of 1 ppm or less can be yielded from kerosene containing organic sulfur compounds.

In the process of the present invention for producing hydrogen, the fuel which has been desulfurized through the aforementioned procedure is subjected to steam reforming, partial-oxidation reforming, or autothermal reforming. More specifically, the fuel is brought into contact with a steam reforming catalyst, a partial-oxidation reforming catalyst, or an autothermal reforming catalyst, to thereby produce hydrogen.
No particular limitation is imposed on the species of the reforming catalyst employed, and any catalysts may be appropriately selected from those conventionally known as a reforming catalyst for hydrocarbon. Examples of such reforming catalysts include a catalyst containing an appropriate carrier and, nickel or zirconium, or a noble metal such as ruthenium, rhodium or platinum supported on the carrier. These metals supported on the carrier may be used singly or in combination of two or more species. Among these catalysts, a nickel-on-carrier (hereinafter referred to as nickel-based catalyst), a rhodium-on-carrier (hereinafter referred to as rhodium-based catalyst), and a ruthenium-on-carrier (hereinafter referred to as ruthenium-based catalyst) are preferred in that these catalysts can effectively prevent deposition of carbon during steam reforming, partial-oxidation reforming, or autothermal reforming.
The carrier of the reforming catalyst preferably contains manganese oxide, cerium oxide, zirconium oxide, etc. Such a carrier containing at least on member of the oxides is particularly preferred.

When a nickel-based catalyst is employed, the amount of nickel supported on the carrier is preferably 3 to 60 mass% on the basis of the amount of carrier. When the nickel amount falls within the above range, performance of a steam reforming catalyst, a partial-oxidation reforming catalyst, or an autothermal reforming catalyst can be fully attained, which is advantageous from an economical viewpoint. The nickel amount is more preferably 5 to 50 mass%, particularly preferably 10 to 30 mass%, in consideration of catalytic activity, cost, and other factors.
When a rhodium-based catalyst or a ruthenium-based catalyst is employed, the amount of rhodium or ruthenium supported on the carrier is preferably 0.05 to 20 mass% on the basis of the amount of carrier. When the rhodium amount or ruthenium amount falls within the above range, performance of a steam reforming catalyst, a partial-oxidation reforming catalyst, or an autothermal reforming catalyst can be fully attained, which is advantageous from an economical viewpoint. The rhodium amount or ruthenium amount is more preferably 0.05 to 15 mass%, particularly preferably 0.1 to 2 mass%, in consideration of catalytic activity, cost, and other factors.

In reaction of steam reforming, the steam/carbon mole ratio (i.e., the ratio of steam to carbon originating from fuel oil) is generally 1.5 to 10. When the steam/carbon mole ratio is 1.5 or higher, hydrogen can be formed in a sufficient amount, whereas when the ratio is 10 or lower, an excessive amount of steam is not required, and thermal loss is suppressed, ensuring high-efficiency hydrogen production. From the aforementioned viewpoints, the steam/carbon mole ratio is preferably 1.5 to 5, more preferably 2 to 4.
Preferably, steam reforming is performed at an inlet temperature of a steam reforming catalyst layer of 630°C or lower. When the inlet temperature is maintained at 630°C or lower, thermal decomposition of fuel oil is prevented, and deposition of carbon on the catalyst or on the wall of a reactor tube by the mediation of carbon radicals is prevented. From the viewpoint, the inlet temperature of he steam reforming catalyst layer is more preferably 600°C or lower.
No particular limitation is imposed on the outlet temperature of a catalyst layer, but the outlet temperature preferably falls within a range of 650 to 800°C. When the outlet temperature is 650°C or higher, a sufficient amount of hydrogen is formed, whereas when the temperature is 800°C or lower, a reactor made of heat-resistant material is not required, which is preferred from economical viewpoint.

The reaction conditions typically employed in partial-oxidation reforming are as follows: pressure of ambient pressure to 5 MPa·G, temperature of 400 to 1,100°C, oxygen (O₂)/carbon mole ratio of 0.2 to 0.8, and liquid hourly space velocity (LHSV) of 0.1 to 100 hr⁻¹.
The reaction conditions typically employed in autothermal reforming are as follows: pressure of ambient pressure to 5 MPa·G, temperature of 400 to 1,100°C, steam/carbon mole ratio of 0.1 to 10, oxygen (O₂)/carbon mole ratio of 0.1 to 1, liquid hourly space velocity (LHSV) of 0.1 to 2 hr⁻¹, and gas hourly space velocity (GHSV) of 1,000 to 100,000 hr⁻¹.
Notably, CO which is by-produced during the aforementioned steam reforming, partial-oxidation reforming, or autothermal reforming adversely affects formation of hydrogen. Therefore, the produced CO is preferably removed by converting to CO₂ through reaction. Thus, according to the process of the present invention, hydrogen for use in fuel cells can be effectively produced.
Fuel cell systems employing liquid fuel generally include a fuel-supplier, a desulfurization apparatus, a reforming apparatus, and a fuel cell. Hydrogen produced through the process of the present invention is supplied to fuel cells.

The present invention also provides a fuel cell system employing hydrogen produced through the aforementioned process. The fuel cell system of the present invention will next be described with reference to the attached Fig. 1.
Fig. 1 shows a schematic diagram of an exemplary fuel cell system according to the present invention. As shown in Fig. 1, a fuel contained in a fuel tank 21 is fed to a desulfurizer 23 through a fuel pump 22. The adsorbent of the present invention for the removal of sulfur compounds are charged into the desulfurizer. The fuel which has been desulfrized by the desulfurizer 23 is mingled with water fed from a water tank through a water pump 24, and the fuel mixture is fed to a gasifier 1 so as to gasify the mixture. The fuel mixture gas is mixed with air fed by means of an air blower 35, and the gas is transferred to a reformation apparatus 31.
The aforementioned reforming catalyst has been charged into the reforming apparatus 31. Through any of the aforementioned reforming reactions, hydrogen or synthesis gas is produced from a fuel mixture (gas mixture containing steam, oxygen, and desulfurized liquid fuel) fed into the reforming apparatus 31.

The thus-produced hydrogen or synthesis gas is transferred to a CO converter 32 and a CO-selective oxidizer 33 for reducing the CO concentration so as not to affect the characteristics of the fuel cell. Examples of the catalyst used in the CO converter 32 include iron-chromium catalysts, copper-zinc catalysts, and noble metal catalysts. Examples of the catalyst used in the CO-selective oxidizer 33 include ruthenium catalysts, platinum catalysts, and mixtures thereof.
A fuel cell 34 is a polymer electrolyte fuel cell including an anode 34A, a cathode 34B, and a polymer electrolyte 34C provided therebetween. The hydrogen-rich gas produced through the above process is fed to the anode, while air is fed to the cathode through the air blower 35. If required, these gases undergo appropriate humidification (by means of a humidifier not illustrated) before introduction to the electrodes.
In the anode, hydrogen dissociates to proton and electron, while in the cathode reaction of oxygen with electron and proton to form water occurs, whereby direct current is provided between the electrodes 34A and 34B. The anode is formed from platinum black, a Pt-on-activated carbon catalyst, a Pt-Ru alloy catalyst, etc. The cathode is formed from platinum black, a Pt-on-activated carbon catalyst, etc.

When a burner 31A of the reforming apparatus 31 is connected with the anode 34A, excess hydrogen may be used as a fuel. In a liquid/gas separator 36 connected with the cathode 34B, a discharge gas is separated from water which has been formed from oxygen and hydrogen contained in air fed to the cathode 34B. The separated water may be used for forming steam.
Notably, since the fuel cell 34 generates heat during electric power generation, the heat is recovered through provision of an exhausted heat recovering apparatus 37 so as to effectively use the recovered heat. The exhausted heat recovering apparatus 37 includes a heat-exchanger 37A for absorbing heat generated during reaction; a heat-exchanger 37B for transferring the heat absorbed in the heat exchanger 37A to water; a cooler 37C, and a pump 37D for circulating a cooling medium to the heat-exchangers 37A and 37B and the cooler 37C. Hot water obtained in the heat exchanger 37B may be effectively used in other facilities.

### Examples

### (1) Preparation of desulfurizing agent

### (desulfurizing agent 1)

Silver nitrate (AgNO₃, product of Wako Pure Chemical Industries, Ltd., >99.8%) (39.4 g) was weighed in a 100-mL beaker and dissolved in ion-exchange water (about 50 mL). To the solution, ion-exchange water was added by use of a messcylinder so as to adjust the total volume to 92 mL. A silica-alumina molded carrier (IS-28N, product of Catalysts and Chemicals Industries, Co., Ltd., surface area: 310 m²/g) (100 g), which had been dried at 120°C for 12 hours, was weighed in another 2-L beaker. Before the temperature of the carrier fell significantly, the entirety of the above-prepared aqueous silver nitrate solution was immediately added to the carrier in a single step. The mixture was stirred for 10 minutes so as to uniformly disperse the silver nitrate aqueous solution in the carrier. After the silver nitrate aqueous solution had uniformly permeated into the carrier, the carrier was allowed to stand for six hours. The thus-formed molded desulfurizing agent was fed to a blow drier which had been heated at 120°C, and dried for 12 hours. Subsequently, the dried agent was calcined at 120°C for one hour. The fired product was pulverized by means of a mortar to a mean particle size of 0.9 mm, to thereby produce a silver-on-silica-alumina desulfurizing agent (Ag: 14 mass%) (desulfurizing agent 1).

### (desulfurizing agent 2)

Through a similar method as employed in preparation of the aforementioned desulfurizing agent 1, a desulfurizing agent was prepared. A molded desulfurizing agent produced from the thus-prepared agent was fed to a blow drier which had been heated at 120°C, and dried for 12 hours. Subsequently, the dried agent was calcined at 200°C for one hour. The fired product was pulverized by means of a mortar to a mean particle size of 0.9 mm, to thereby produce a silver-on-silica-alumina desulfurizing agent (Ag: 17 mass%) (desulfurizing agent 2).

### (desulfurizing agent 3)

Through a similar method as employed in preparation of the aforementioned desulfurizing agent 1, a desulfurizing agent was prepared. A molded desulfurizing agent produced from the thus-prepared agent was fed to a blow drier which had been heated at 120°C, and dried for 12 hours. Subsequently, the dried agent was calcined at 300°C for one hour. The fired product was pulverized by means of a mortar to a mean particle size of 0.9 mm, to thereby produce a silver-on-silica-alumina desulfurizing agent (Ag: 18 mass%) (desulfurizing agent 3).

### (desulfurizing agent 4)

Through a similar method as employed in preparation of the aforementioned desulfurizing agent 1, a desulfurizing agent was prepared. A molded desulfurizing agent produced from the thus-prepared agent was fed to a blow drier which had been heated at 120°C, and dried for 12 hours. Subsequently, the dried agent was calcined at 400°C for one hour. The fired product was pulverized by means of a mortar to a mean particle size of 0.9 mm, to thereby produce a silver-on-silica-alumina desulfurizing agent (Ag: 19 mass%) (desulfurizing agent 4).

### (desulfurizing agent 5)

Through a similar method as employed in preparation of the aforementioned desulfurizing agent 1, a desulfurizing agent was prepared. A molded desulfurizing agent produced from the thus-prepared agent was fed to a blow drier which had been heated at 120°C, and dried for 12 hours. Subsequently, the dried agent was calcined at 450°C for one hour. The fired product was pulverized by means of a mortar to a mean particle size of 0.9 mm, to thereby produce a silver-on-silica-alumina desulfurizing agent (Ag: 19 mass%) (desulfurizing agent 5).

### (desulfurizing agent 6)

Through a similar method as employed in preparation of the aforementioned desulfurizing agent 1, a desulfurizing agent was prepared. A molded desulfurizing agent produced from the thus-prepared agent was fed to a blow drier which had been heated at 120°C, and dried for 12 hours. Subsequently, the dried agent was calcined at 500°C for one hour. The fired product was pulverized by means of a mortar to a mean particle size of 0.9 mm, to thereby produce a silver-on-silica-alumina desulfurizing agent (Ag: 17 mass%) (desulfurizing agent 6).

### (desulfurizing agent 7)

The procedure for preparing desulfurizing agent 4 was repeated, except that calcination was performed for three hours, to thereby produce a silver-on-silica-alumina desulfurizing agent (Ag: 19 mass%) (desulfurizing agent 7).

### (desulfurizing agent 8)

The procedure for preparing desulfurizing agent 1 was repeated, except that the amount of silver nitrate, the amount of ion-exchange water, and the total volume total were changed to 19.7 g, about 20 mL, and 27 mL, respectively, and that a molded alumina carrier (product of Mizusawa Industrial Chemicals Ltd., surface area: 210 m²/g) (50 g) was used, to thereby produce a silver-on-silica-alumina desulfurizing agent (Ag: 16 mass%) (desulfurizing agent 8).

### (2) Quantitation of nitrogen and silver in desulfurizing agent

Nitrogen content of each of desulfurizing agents 1 to 7 was determined by means of a carbon-hydrogen-nitrogen element analyzer (CHN-corder Model MT-06, product of Yanaco) under the following analytical conditions: furnace temperature: 950°C, He flow: 200 mL/min, O₂ flow: 15 mL/min, amount of sample: 5 mg, component detected: N₂, detector: TCD (thermal conductive, He). In a manner similar to that employed for the preparation of desulfurizing agent 1, silver nitrate was caused to be supported on a silica-alumina carrier in a nitrogen amount of 0, 0.60, 1.04, and 1.87 mass%, to thereby prepare samples. The samples were subjected to element analysis by means of the aforementioned analyzer, and a calibration curve was drawn through the least squares method, whereby the nitrogen content was determined. The amount of each sample was determined so that the value of nitrogen content falls within the range of the calibration curve.
Silver content was determined by means of a multiple-type inductive coupled plasma analyzer (hereinafter abbreviated as ICP Model SPS5100, product of SII NanoTechnology, Inc.), which meets the general rules of JIS K0116. The calibration curve was determined by use of a commercial Ag standard 1000 ppm solution for atomic absorption spectrometry. Each sample was micro-pulverized, and a portion (about 0.1 g) was placed in a platinum dish (capacity:100 mL). The sample was dissolved by adding hydrofluoric acid (HF, commercial special grade reagent) and an aqueous sulfuric acid solution (i.e., equivolume mixture of commercial special grade reagent and pure water) and heating the resultant mixture. Heating was continued until white fumes of sulfuric acid were generated. After volatilization of HF, the volume was standardized by use of a 100-mL whole flask. The Ag content of the solution was determined through ICP. In the case where Ag content was excessively high, the solution was appropriately diluted before determination through ICP.
From the determined nitrogen content and silver content, the mole ratio of nitrogen to silver of each desulfurizing agent was calculated.

### (3) Method for evaluating desulfurizing agents

### (Accelerated evaluation)

Each desulfurizing agent (2.5 mL) was weighed and charged into a stainless steel reactor tube (inner diameter: 9 mm). Under ambient pressure, dry nitrogen was passed through the tube at 500 mL/min for two hours, to thereby dry the desulfurizing agent. Subsequently, while the desulfurizing agent was maintained at 25°C, kerosene having the following properties was caused to pass through the reactor tube at a liquid hourly space velocity (LHSV) of 40 h⁻¹. Outlet sulfur concentration was determined four hours after the start of passage of the kerosene. The liquid hourly space velocity employed in the evaluation is considerably higher than that employed in generally performed desulfurization, and such a condition is severe to the desulfurizing agent. The severe condition was employed, in order to quickly evaluate the effect of the desulfurizing agent preparation method on desulfurization performance.

### (Properties of kerosene)

In the above evaluation, commercial kerosene (sulfur content: 6 ppm by mass) was used. Table 1 shows distillation properties of the kerosene.
[Table 1]

**Table 1**

| Distillation properties of the kerosene | |
|---|---|
| Initial boiling | 155°C |
| 10% Recovered temp. | 169°C |
| 30% Recovered temp. | 184°C |
| 50% Recovered temp. | 202°C |
| 70% Recovered temp. | 225°C |
| 90% Recovered temp. | 254°C |
| End point | 275°C |

### (4) Results of desulfurization test

Outlet sulfur concentration determined four hours after the start of passage of kerosene through tubes containing the respective tested desulfurizing agents 1 to 8 is shown in Table 2, along with calcination temperature at which the desulfurizing agent had been prepared and nitrogen/silver mole ratio (N/Ag).

**[Table 2]**

| Desulfurizing agent | Calcination temp. (°C) | N/Ag (mole ratio) | Outlet S concentration (ppm by mass) |
|---|---|---|---|
| 1 | 120 | 1.02 | 0.6 |
| 2 | 200 | 0.92 | 0.6 |
| 3 | 300 | 0.69 | 0.7 |
| 4 | 400 | 0.39 | 0.7 |
| 5 | 450 | <0.04 | 2.0 |
| 6 | 500 | <0.04 | 2.1 |
| 7 | 400 | 0.04 | 1.6 |
| 8 | 120 | 1.04 | 0.6 |

Under the conditions that a silica-alumina carrier was employed and the calcination time was one hour (desulfurizing agents 1 to 6), when the desulfurizing agent calcination temperature was 400°C or lower, the N/Ag ratio was 0.1 or higher, and the outlet sulfur concentration was 1 ppm by mass or lower, whereas when the calcination temperature was 450°C or higher, the N/Ag ratio lowered considerably decreased, and the outlet sulfur concentration increased, indicating considerable impairment of desulfurization performance. Since the desulfrization test was performed at 25°C for desulfurizing agents 1 to 6, these desulfurizing agents were found to exhibit excellent desulfurization efficiency for kerosene at room temperature. Calcination of desulfurizing agents is not particularly required. Sufficient desulfirization effect was found to be attained through only drying a desulfurizing agent. Sufficient desulfurization effect was attained at a calcination temperature of 400°C and a calcination time of one hour. When the calcination time was prolonged from one hour to three hours (for comparison of desulfurizing agent 7 with desulfurizing agent 4), a drop in N/Ag ratio and a drop in desulfurization effect were observed. Even though the carrier was changed from silica-alumina to alumina (desulfurizing agent 8), sufficient desulfurization effect and N/Ag mole ratio were obtained through drying at low temperature, similar to the case where the silica-alumina was employed. Therefore, the desulfurization effect of the silver-containing desulfurizing agent was found to be closely related to the N/Ag mole ratio of the desulfurizing agent.

### Industrial Applicability

Since the method for removing sulfur from liquid fuel of the present invention employs a specific desulfurizing agent, liquid fuel containing sulfur compounds can be efficiently desulfurized at 80°C or lower, leading to reduction in energy cost.
Through reforming of the thus-desulfurized fuel produced through the method, hydrogen for use in fuel cells can be produced efficiently.

## Claims

1. A desulfurizing agent for hydrocarbon compounds, comprising a porous carrier, and Ag supported on the carrier, wherein the amount of Ag supported in the carrier is 0.5 to 50 mass%, and the ratio of the amount by mole of nitrogen contained in the agent to the amount by mole of Ag is 10 to 100%.

2. A desulfurizing agent for hydrocarbon compounds as described in claim 1, which has an Ag content of 3 to 30 mass%.

3. A desulfurizing agent for hydrocarbon compounds as described in claim 1 or 2, wherein Ag is supported on the carrier through application of silver nitrate.

4. A desulfurizing agent for hydrocarbon compounds as described in any of claims 1 to 3, wherein the porous carrier is at least one species selected from among silica-alumina, silica, alumina, zeolite, titania, zirconia, magnesia, silica-magnesia, zinc oxide, terra alba, clay, diatomaceous earth, and activated carbon.

5. A desulfurization method comprising desulfurizing hydrocarbon compounds by use of a desulfurizing agent as recited in any of claims 1 to 4.

6. A desulfurization method as described in claim 5, wherein the hydrocarbon compound is at least one species selected from among natural gas, alcohol, ether, LPG, naphtha, gasoline, kerosene, light oil, heavy oil, asphaltene oil, oil recovered from oil sand, liquefied coal oil, petroleum-derived heavy oil, shale oil, GTL, oil recovered from waste plastics, and biofuel.

7. A desulfurization method as described in claim 5 or 6, wherein desulfurization is performed at -40 to 80°C.

8. A process for producing hydrogen, **characterized by** comprising desulfurizing hydrocarbon compounds through a desulfurization method as recited in any claims 5 to 7, and reforming the desulfurized hydrocarbon compounds through contact with a reformation catalyst.

9. A process for producing hydrogen as described in claim 8, wherein the reforming catalyst is any of a steam reforming catalyst, an autothermal reforming catalyst, and a partial-oxidation reforming catalyst.

10. A process for producing hydrogen as described in claim 8 or 9, wherein the steam reforming catalyst, the autothermal reforming catalyst, or the partial-oxidation reforming catalyst is an Ni-based, Rh-based, or Ru-based catalyst.

11. A fuel cell system **characterized by** employing hydrogen produced through a process as recited in any of claims 8 to 10.
